# FASCICULE DE BREVET EUROPEEN

(11) **EP 1 067 640 B1**
(45) Date de publication et mention de la délivrance du brevet: **11.08.2004**
(21) Numéro de dépôt: 00401696.0
(22) Date de dépôt: 15.06.2000
(51) Int. Cl.: H01S 3/30, H04B 10/17

(54) **Système de communication par fibres optiques utilisant l'amplification Raman**
Faseroptisches Übertragungssystem mit Raman Verstärkung
Optical fiber communication system with Raman amplification

(30) Priorité: 05.07.1999 FR 9908657
(43) Date de publication de la demande: 10.01.2001
(73) Titulaire: ALCATEL, 75008 Paris (FR)
(72) Inventeur: Brandon, Eric, 92340 Bourg la Reine (FR); Blondel, Jean-Pierre, 78530 Buc (FR); Le Roux, Patrice, 91310 Montlhery (FR); Toullier, Denis, 45400 Fleury Les Aubrais (FR)
(74) Mandataire: Lamoureux, Bernard

(56) Documents cités:
- EP-A- 0 789 432
- HANSEN P B ET AL: "Rayleigh scattering limitations in distributed Raman pre-amplifiers" IEEE PHOTONICS TECHNOLOGY LETTERS, JAN. 1998, IEEE, USA, vol. 10, no. 1, pages 159-161, XP002134578 ISSN: 1041-1135
- HANSEN S.L. ET AL: 'Gain Limit in Erbium-Doped Fiber Amplifiers Due to Internal Rayleigh Backscattering' IEEE PHOTONICS TECHNOLOGY LETTERS vol. 4, no. 6, 1992, NEW-YORK, USA, pages 559 - 561

## Description

La présente invention concerne le domaine des transmissions par fibres optiques, et notamment les systèmes de transmission sans répéteurs. Elle s'applique notamment aux systèmes de transmission à fibre optique, utilisant un multiplexage de longueur d'onde (en anglais "wavelength division multiplexing" ou WDM).

Une des solutions connues pour la transmission de signaux dans des fibres optiques consiste à disposer à intervalles réguliers le long du système de transmission des amplificateurs optiques, et notamment des amplificateurs à fibre optique dopée à l'erbium. Une telle solution est par exemple décrite dans le docoment EP-A-0 789 432 et dans Bergano, "Long haul WDM transmission using optimum channel modulation : 32 x 5 Gbit/s 9300 km demonstration", OFC'97, post deadline paper 16. Les distances de transmission dans un tel système sont limitées par le rapport signal sur bruit, et notamment par la présence de bruit d'amplification spontanée (ASE, acronyme de l'anglais "amplification spontaneous noise") généré dans les amplificateurs. Il

Il a aussi été proposé dans un article Morten Nissov et autres, "100 Gb/s (10x10 Gb/s) WDM transmission over 7200 km using distribution Raman amplification", OFC'97, post deadline paper, d'utiliser dans un système de transmission uniquement une amplification distribuée par effet Raman stimulé (SRS, acronyme de l'anglais "Stimulated Raman Scattering") pour l'amplification à intervalles réguliers du signal. Cette solution permet une amélioration du rapport signal sur bruit d'environ 2 dB par rapport à une solution comparable utilisant uniquement des pompes discrètes. Une description de l'effet Raman est donnée dans l'ouvrage de G.P. Agrawal, "Nonlinear Fibre Optics", Academic Press 1980.

P. B. Hansen et autres, "Rayleigh scattering limitations in distributed Raman pre-amplifiers", OFC'97, Technical digest, FA2, et IEEE Photonics Technology Letters, 10 (1), p. 159 (1998), ainsi que S. L. Hansen et autres "Gain Limit in Erbium-Doped Fiber Amplifiers Due to Internal Rayleigh Backscattering", IEEE Photonics Technology Letters, 4 (6), p. 559 (1992) indiquent que la diffusion Rayleigh peut constituer une limitation à l'utilisation de l'amplification Raman dans des systèmes de transmission; les articles comparent les limitations imposées dans des fibres DSF (acronyme de l'anglais Dispersion Shifted Fibers, fibre à dispersion décalée) et SCF (acronyme de l'anglais Silica Core Fiber, fibre à coeur en silice). Dans les deux premiers articles, une pompe contra-propagative à 1,1 W est utilisée pour la préamplification Raman. Ces documents soulèvent le problème de la limitation que peut imposer la diffusion Rayleigh à l'amplification Raman, mais ne proposent aucune solution pour régler ce problème.

L'invention propose une solution à ce problème ; cette solution est simple et efficace. Elle permet de surmonter la limitation imposée à l'amplification Raman par la diffusion Rayleigh.

Plus précisément, l'invention propose un système de transmission par fibre optique, comprenant de la fibre de ligne et des moyens de pompage pour une amplification distribuée par diffusion Raman stimulée dans la fibre de ligne, dans lequel la fibre de ligne présente plusieurs tronçons, la nature de la fibre des tronçons et la longueur des tronçons étant choisies de sorte que le gain Raman est inférieur en tout point du système au coefficient de diffusion Rayleigh.

Dans un mode de réalisation, les moyens de pompage envoient un signal de pompe contra-propagatif.

Dans un autre mode de réalisation, les moyens de pompage envoient un signal de pompe co-propagatif.

De préférence, le tronçon de fibre adjacent aux moyens de pompage comprend une fibre à aire effective importante.

Dans un autre mode de réalisation, le tronçon de fibre adjacent audit tronçon d'aire effective importante comprend de la fibre à dispersion décalée.

D'autres caractéristiques et avantages de l'invention apparaîtront à la lecture de la description qui suit de modes de réalisation de l'invention, donnée à titre d'exemple et en référence aux dessins annexés, dont la figure unique montre une représentation schématique d'un système de transmission selon l'invention.

L'invention propose, pour surmonter la limitation induite par la diffusion Rayleigh, d'utiliser dans un système de transmission plusieurs fibres différentes; de fait, la limitation provient du fait que lorsque le gain Raman est supérieur au coefficient de diffusion Rayleigh de la fibre, des oscillations peuvent se produire. L'invention à adapter la nature des fibres en fonction du gain Raman, et donc de la puissance de pompe et leurs longueurs, de telle sorte que le gain Raman reste inférieur au coefficient de diffusion Rayleigh en tout point du système.

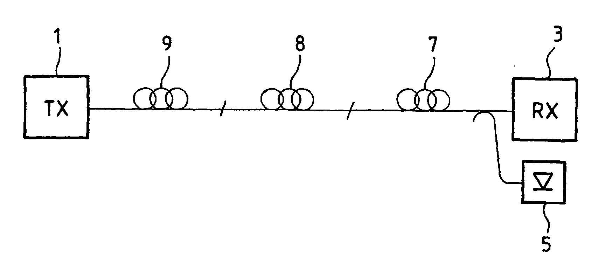

La figure 1 montre une représentation schématique d'un système de transmission selon l'invention; le système de la figure 1 est un système de transmission à fibre optique sans répéteurs, avec une préamplification par effet Raman; apparaissent donc sur la figure l'émetteur TX 1, le récepteur RX 3, et du côté du récepteur, un moyen de pompage optique 5 servant à injecter dans la fibre de ligne des signaux contra-propagatifs, qui assurent une amplification par diffusion Raman stimulée.

Comme le montre la figure, la fibre de ligne entre l'émetteur et le récepteur est constituée de plusieurs tronçons de fibres. Le tronçon 7 le plus proche du récepteur, qui est celui dans lequel le signal de pompe optique 5 présente l'intensité la plus importante, est choisi de sorte à éviter les oscillations; on peut notamment utiliser pour ce tronçon une fibre présentant une aire effective importante, diminuer le coefficient de diffusion Rayleigh, et donc éviter les oscillations. On entend par aire effective importante une aire effective supérieure ou égale à 70 µm².

Dans le tronçon 8 suivant, la puissance du signal de pompe optique 5 est moins importante, et l'on peut de la sorte utiliser une fibre présentant une aire effective plus faible, et un gain Raman important. On peut à cet effet utiliser de la fibre à dispersion décalée (DSF ou "Dispersion Shifted Fiber").

Après le tronçon 8, la fibre de ligne jusqu'à l'émetteur est formée d'un troisième tronçon 9. Dans ce tronçon, la puissance du signal de pompe optique est quasi-négligeable, et il n'y a quasiment pas d'amplification; de la sorte, il n'y a pas non plus d'oscillations dans ce tronçon de fibre.

La longueur et la nature des différents tronçons peuvent être adaptées comme expliqué maintenant, en fonction de la diffusion Rayleigh. Pour une puissance de pompe donnée, on choisit pour le premier tronçon une fibre présentant une aire effective et/ou une composition chimique telles que le gain Raman soit inférieur au coefficient de diffusion Rayleigh. Le gain Raman peut par exemple être calculé suivant l'approximation décrite dans A. R. Chraplyvy, "Optical power limits in multi-channel wavelength division multiplexed systems due to Stimulated Raman Scattering," Electronics Letters, vol. 20 n°2 (1984), pp. 58-59.

Le coefficient de diffusion Rayleigh est calculé pour une fibre comme expliqué dans "On the theory of backscattering in single mode optical fiber, Arthur H. Hartog et autres, Journal of Lightwave Technology, vol. LT-2, Avril 1984.

On choisit ensuite la longueur de la fibre pour le premier tronçon en fonction de la puissance de l'onde de pompe à injecter dans le deuxième tronçon. Pour utiliser une fibre donnée dans le deuxième tronçon, le fait de faire varier la longueur du premier tronçon permet de régler la puissance de l'onde de pompe qui est injectée dans le deuxième tronçon. On peut donc de nouveau assurer que le gain Raman dans le deuxième tronçon est inférieur au coefficient de diffusion Rayleigh, et ainsi éviter les oscillations.

La longueur du deuxième tronçon peut alors être déterminée en fonction de la puissance l'onde de pompe résiduelle à injecter dans le troisième tronçon. Dans l'exemple de la figure 1, la puissance l'onde de pompe injectée dans le troisième tronçon est sensiblement nulle.

Pour chacun des tronçons, on peut calculer de façon connue en soi le coefficient de diffusion Rayleigh, la puissance de la pompe, et le gain Raman. Le résultat de l'invention - éviter dans tous les tronçons une oscillation du fait de la diffusion Rayleigh - est ainsi aisément vérifiable par l'homme du métier.

Dans le mode de réalisation de la figure 1, l'invention a été expliquée dans le cas d'une pré-amplification par effet Raman, avec sur la fin de la liaison une pompe contra-propagative; elle s'applique aussi à des systèmes dans lesquels la pompe est co-progagative, i.e. pour des systèmes avec une post-amplification.

L'invention a été décrite en référence à un système de transmission à fibre optique sans répéteur; elle s'applique toutefois aussi à des systèmes de transmission à répéteurs, dans lesquels on met en oeuvre une amplification distribuée par effet Raman. On peut dans ce cas mettre en oeuvre l'invention de la même façon, en prévoyant entre des répéteurs des tronçons distincts de fibre de ligne.

L'invention est décrite dans le cas où le système de transmission présente trois tronçons de fibre optique elle s'applique à un nombre de tronçons différents, en fonction de la configuration souhaitée. On a aussi mentionné dans la description l'exemple d'une fibre DSF, qui présente un fort coefficient de gain Raman et une faible aire effective ; ces caractéristiques favorisent l'amplification Raman en ligne. Cependant, on peut aussi utiliser pour le tronçon 8 un autre type de fibre, possédant également un coefficient Raman, par exemple une fibre standard du type commercialisé par la titulaire du présent brevet sous la référence G652 ; le coefficient Raman d'une telle fibre est plus élevé que celui de la fibre PSCF (acronyme de l'anglais "pure silica core fiber").

## Revendications

1. Un système de transmission par fibre optique, comprenant de la fibre de ligne et des moyens de pompage (5) pour une amplification distribuée par diffusion Raman stimulée dans la fibre de ligne, dans lequel la fibre de ligne présente plusieurs tronçons (7, 8, 9), la nature de la fibre des tronçons et la longueur des tronçons étant choisies de sorte que le gain Raman est inférieur en tout point du système au coefficient de diffusion Rayleigh.

2. Le système selon la revendication 1, **caractérisé en ce que** les moyens de pompage envoient un signal de pompe contra-propagatif.

3. Le système selon la revendication 1, **caractérisé en ce que** les moyens de pompage envoient un signal de pompe co-propagatif.

4. Le système selon l'une des revendications 1, 2 ou 3, **caractérisé en ce que** le tronçon de fibre adjacent aux moyens de pompage comprend une fibre à aire effective importante.

5. Le système selon la revendication 4, **caractérisé en ce que** le tronçon de fibre adjacent audit tronçon d'aire effective importante comprend de la fibre à dispersion décalée.

## Patentansprüche

1. Ein faseroptisches Übertragungssystem, bestehend aus der Leitungsfaser und Pumpvorrichtungen (5) zur Verteilerverstärkung mittels stimulierter Raman-Streuung in der Leitungsfaser, wobei die Leitungsfaser mehrere Abschnitte (7, 8, 9) aufweist und die Art der Fasern in den Abschnitten sowie die Länge der Abschnitte so gewählt werden, dass die Raman-Verstärkung an jedem Punkt des Systems unter dem Rayleigh-Streuungsfaktor liegt.

2. Das System gemäß Anspruch 1, **dadurch gekennzeichnet, dass** die Pumpvorrichtungen ein gegenläufiges Pumpensignal aussenden.

3. Das System gemäß Anspruch 1, **dadurch gekennzeichnet, dass** die Pumpvorrichtungen ein gleichläufiges Pumpensignal aussenden.

4. Das System gemäß einem der Ansprüche 1, 2 oder 3, **dadurch gekennzeichnet, dass** der Faserabschnitt, der an die Pumpvorrichtungen angrenzt, aus einer Faser mit erheblicher effektiver Querschnittsfläche besteht.

5. Das System gemäß Anspruch 4, **dadurch gekennzeichnet, dass** der an den genannten Abschnitt mit erheblicher effektiver Querschnittsfläche angrenzende Abschnitt aus einer dispersionsverschoben Faser besteht.

## Claims

1. A fibre optic transmission system comprising line fibre and pumping means (5) for distributed amplification in the line fibre by stimulated Roman scattering, wherein the line fibre comprises a plurality of sections (7, 8, 9) and the nature of the fibres in each section and the length of each section are chosen so that the Roman gain is lower than the Rayleigh backscattering coefficient at all points of the system.

2. A system according to claim 1 **characterized in that** the pumping means emit a contra-propagating pump signal.

3. A system according to claim 1 **characterized in that** the pumping means emit a co-propagating pump signal.

4. A system according to any of claims 1, 2 or 3 **characterized in that** the fibre section adjacent the pumping means comprises a fibre with a high effective area.

5. A system according to claim 4 **characterized in that** the fibre section adjacent said section of high effective area comprises dispersion shifted fibre.
